# EUROPEAN PATENT APPLICATION

(11) **EP 1 315 338 A2**
(43) Date of publication of application: **28.05.2003**
(21) Application number: 02025639.2
(22) Date of filing: 19.11.2002
(51) Int. Cl.: H04L 12/46

(54) **Network transfer system and transfer method**

(30) Priority: 21.11.2001 JP 2001355448
(71) Applicant: NEC CORPORATION, Tokyo (JP)
(72) Inventor: Shimizu, Hiroshi, Nec Corporation, Tokyo (JP)
(74) Representative: VOSSIUS & PARTNER

(57) **Abstract**

A network transfer system and a transfer method can reflect a policy of an administrator in route setting, achieve effective use of a network resource, quickly recover from failure, and use relatively inexpensive nodes as relaying nodes. The network transfer system connects a plurality of nodes performing mutual communication with a plurality of virtual networks having routes forming no loop.

## Description

The present invention relates generally to a network transfer system and a transfer method. More particularly, the invention relates to a network transfer system and a transfer method to be used in a network connected using layer 2 switches (hereinafter referred to as L2 switches) represented by an Ethernet (registered trademark) between nodes.

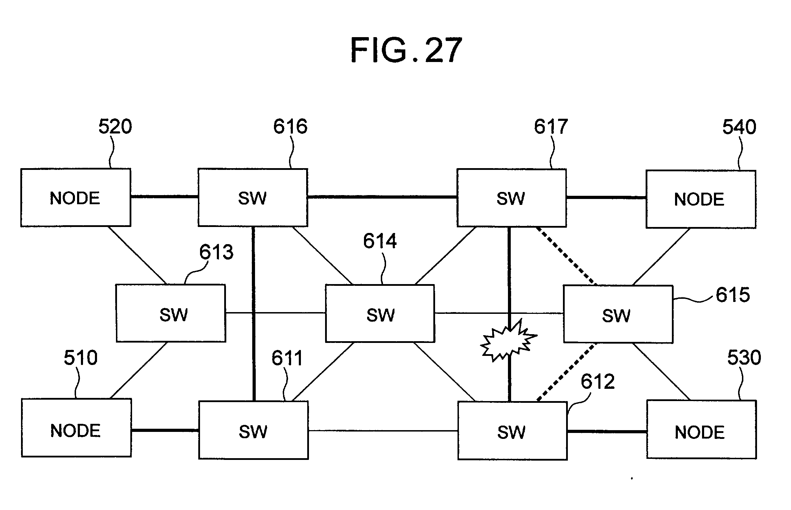

Fig. 27 is an illustration showing a construction of one example of an L2 switch network. Problem in the prior art will be discussed with reference to Fig. 27. Nodes 510, 520, 530 and 540 are mutually connected by L2 switches (SW) 611 to 617. In this network, in order to realize redundant construction for a measure to failure in the network, loops are formed at various portions.

For instance, in a loop established by a link connecting SW616 - SW617 - SW611 - SW616, a known art, called Spanning Tree, is employed in order to prevent the same packet from infinite circulation on the loop once loop is caused. The tree is uniquely and automatically determined by a Spanning Tree Protocol (hereinafter referred to as STP).

For example, taking the L2 switch SW616 as a root of the tree, the node 520 is directly connected to the L2 switch SW616. The nodes 510 and 540 are connected to the L2 switch SW616 via the L2 switches SW611 and SW617. The nodes 530 are connected to the L2 switch SW616 via the L2 switches SW617 and SW612 (these links are shown by thick lines in Fig. 27). Other links do not become working.

On the other hand, as a measure for failure, when failure is caused between the L2 switches SW617 and SW612, an alternate route is automatically set by the STP. For example, a link connecting the L2 switches SW612 and SW617 is set via the L2 switch SW615 (this link is shown by broken line in Fig. 27), for example.

However, in the conventional L2 transfer network using the STP, (1) it has been difficult to reflect policy (intention) of an administrator since the route is set automatically by the STP, (2) the links becoming working are part of links of the entire network to cause difficulty in effective use of a network resource, and (3) upon recovery from failure, since the alternate route is set using the STP, a long period is required for recovery, and thus difficulty is encountered in quick recovery from failure.

Furthermore, (4) there is a network of MPLS (MultiProtocol Label Switch) system. MPLS system is a system for realizing setting of load distribution of traffic, setting of IP-VPN (Internet Protocol-Virtual Private Network) or the like by inserting identifier called as "label" in the IP packet and transferring high speed transfer of the packet by the MPLS corresponding node on the IP network managing correspondence between the label and route using the label. The MPLS system is characterized by realizing alternate route control in policy base or load distribution (transfer using a plurality of routes) called as Traffic Engineering. Accordingly, if the conventional L2 switch network technology is employed for establishing connection between MPLS nodes, feature to perform control in policy base cannot be used effectively. Therefore, expensive MPLS nodes have to be used even for relaying nodes (nodes corresponding to SW611 to SW617 of Fig. 27).

Therefore, it is an object of the present invention to provide a network transfer system and a transfer method which can reflect apolicy of an administrator in route setting, achieve effective use of a network resource, quickly recover from failure, and use relatively inexpensive nodes as relaying nodes.

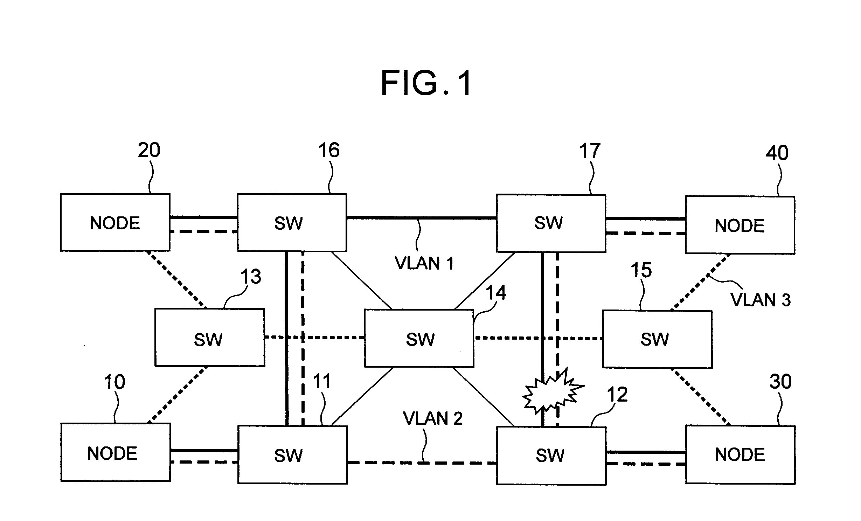

Particularly, objects of the present invention are as follows:
(1) to realize route setting, alternate routing control, parallel transfer including redundant construction in policy base using L2 switches;
(2) to improve use ratio of links of a network;
(3) to realize high speed failure recovery control; and
(4) to divide MPLS network into edge nodes (nodes 10, 20, 30, 40 in Fig. 1) and core nodes (SW11 to SW17 of Fig. 1), to realize the core nodes by inexpensive L2 switch instead of an MPLS router and whereby to realize low cost MPLS network.

In order to accomplish the above-mentioned objects, according to the first aspect of the present invention, a network transfer system connects a plurality of nodes performing mutual communication with a plurality of virtual networks having routes forming no loop.

According to the second aspect of the present invention, a network transfer method connecting a plurality of nodes performing mutual communication with a plurality of virtual networks having routes forming no loop for packet transmission between a plurality of nodes via the virtual networks.

The virtual network may be formed using a plurality of switches. Routes of the virtual network may have overlap at least in part. A parallel transfer communication may be performed between nodes using the virtual network. The node may attaches a tag information specifying the virtual network to a packet in advance of transmission of the packet to the virtual network, and removing the tag information specifying the virtual network from the packet received from the virtual network. The node may have a plurality of buffers corresponding to respective virtual networks and storing packets to be transmitted and received in the buffer.

The virtual network may be consisted of a first virtual network group and a second virtual network group, and a packet of the second virtual network group may be transferred via the first virtual network group corresponding to this network. A tag information specifying the first virtual network corresponding to the network may be attached together with a tag information specifying the second virtual network, to a packet of the second virtual network, and the packet may be transferred on the basis of only tag information specifying the first virtual network.

The packet may be transferred using a plurality of the virtual networks in normal state, and upon occurrence of failure in a part of the virtual network, the packet to be transferred to the faulty virtual network may be transferred via other virtual network. The node may be responsive to detection of failure of the virtual network, to transmit a broadcast packet notifying failure for the virtual network relating to the faulty portion, and an opposite node receiving the broadcast packet switches to other virtual network.

The virtual network may be consisted of two virtual networks having intermediate routes not overlapping, and one of the two virtual network is taken as working and the other is taken as reserve, and when failure is caused in working virtual network, the other virtual network as reserve may be switched to be working.

The virtual network may be consisted of two virtual networks having intermediate routes not overlapping, the same packet may be transmitted from the node to an opposite node via the two virtual networks, the opposite note may normally read out the packet received through one of the virtual networks, and upon occurrence of failure in one of virtual network, the packet received via the other virtual network may be read out.

The node may be a node for layer 2. In the alternative, the node may be an node for IP layer, a tag information specifying at least the virtual network may be attached to a packet to be transmitted from each node, and the packet may be transmitted through the virtual network indicated in the tag information. In the further alternative, the node may be a node for MPLS, a tag information specifying at least the virtual network may be attached to a packet to be transmitted from each node, and the packet may be transmitted through the virtual network indicated in the tag information.

The node may attach a header information indicative of band control and high priority transfer per the virtual network upon transmission of the packet, and a switch of the virtual network may perform switch control with taking priority control into account. The node may transmit a packet attached a header information indicating band transfer control and a high priority transfer per virtual network upon transmission of packet and performs switch control with taking priority control into account. The virtual network may be set in a form connecting a pair of nodes, in a switch of the virtual network, a switching table indicating correspondence between a tag information specifying the virtual network and a port may be provided, and the switch may switch the virtual network to transfer the packet on the basis of the switching table.

The virtual network may be consisted of two virtual networks having routes not overlapping, one being used as working and the other being used as reserve, a broadcast packet for diagnosis may be transmitted from a sender node to a plurality of opposite nodes via working virtual networks, and the virtual networks may be switched on the node side on the basis of a result whether the broadcast packet is received or not. In the alternative, the virtual network may be consisted of two virtual networks having routes not overlapping, the same packets including the packet for diagnosis may be transmitted from the node to opposite note via the two virtual networks, in the opposite node, only packet received via one of virtual networks is read out in normal state, and upon occurrence of failure in the virtual network, the packet received via the other virtual network is read out. The switch provided in the virtual network may be used in common between different virtual networks.

The present invention will be understood more fully from the detailed description given hereinafter and from the accompanying drawings of the preferred embodiment of the present invention, which, however, should not be taken to be limitative to the invention, but are for explanation and understanding only.
Fig. 1 is an illustration showing a construction of best mode of a layer 2 network transfer system according to the present invention;
Fig. 2 is an illustration showing a relationship between each virtual network constructed with L2 switches and nodes;
Fig. 3 is an illustration showing one example of a transmission path interface portion having Ethernet (registered trademark) ports 121 and 122;
Figs. 4A to 4D are illustrations showing construction of one example of packet frames;
Fig. 5 is an illustration showing a construction of the second embodiment of a virtual network according to the present invention;
Fig. 6 is an illustration showing one example of an L2 switch;
Fig. 7 is an illustration showing one example of the node in the eighth embodiment;
Fig. 8 is an illustration showing a construction of one example of a VLAN buffer in the ninth embodiment;
Fig. 9 is an illustration showing a construction of a virtual network in the tenth embodiment;
Fig. 10 is an illustration showing a construction of an L2 switch in the tenth embodiment;

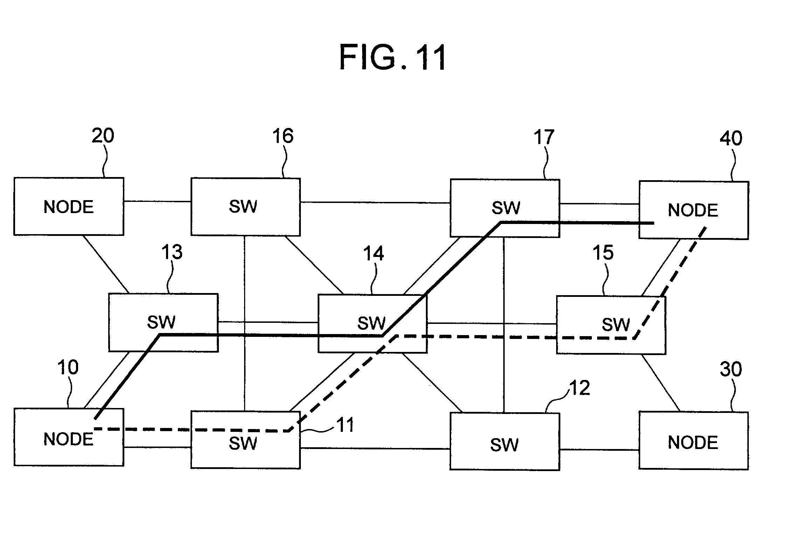

Fig. 11 is an illustration showing a construction of an L2 switch using the tenth embodiment;
Fig. 12 is a flowchart showing operation of the embodiment of the present invention;
Fig. 13 is a flowchart showing operation of a node upon transmission;
Fig. 14 is a flowchart showing operation of the node upon reception;
Fig. 15 is a flowchart showing operation of the second embodiment;
Fig. 16 is a flowchart showing operation of the third embodiment;
Fig. 17 is a flowchart showing operation of the fourth embodiment;
Fig. 18 is a flowchart showing operation of the fifth embodiment;
Fig. 19 is a flowchart showing operation of the sixth embodiment;
Fig. 20 is a flowchart showing operation of the seventh embodiment;
Fig. 21 is a flowchart showing operation of the eighth embodiment;
Fig. 22 is a flowchart showing operation of the ninth embodiment;
Fig. 23 is a flowchart showing operation of the tenth embodiment;
Fig. 24 is a flowchart showing operation of the eleventh embodiment;
Fig. 25 is a flowchart showing operation of the twelfth embodiment;
Fig. 26 is a flowchart showing operation of the thirteenth embodiment; and
Fig. 27 is an illustration showing a construction of one example of the conventional L2 switch network.

The present invention will be discussed hereinafter in detail in terms of the preferred embodiment of the present invention with reference to the accompanying drawings. In the following description, numerous specific details are set forth in order to provide a thorough understanding of the present invention. It will be obvious, however, to those skilled in the art that the present invention may be practiced without these specific details. In other instance, well-known structure is not shown in detail in order to avoid unnecessary obscurity of the present invention.

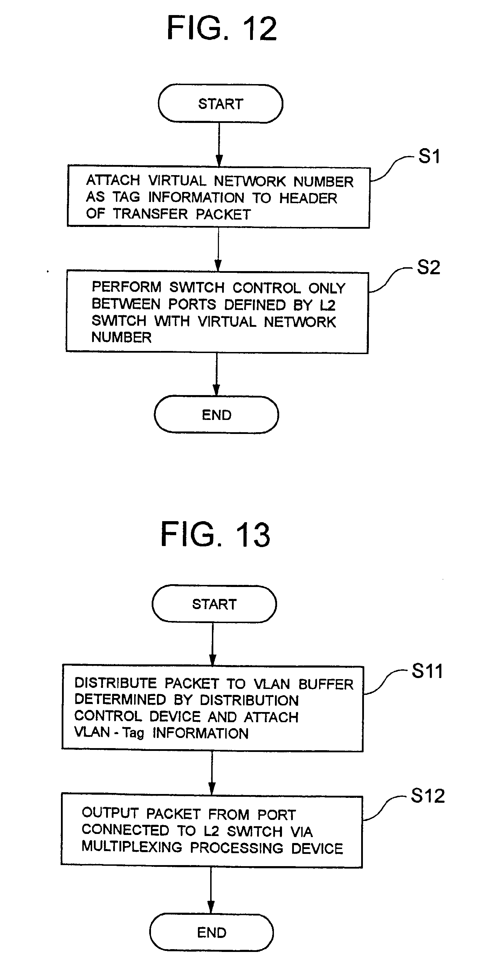

Fig. 1 is an illustration showing a construction of the best mode of a layer 2 network transfer system according to the present invention, and Fig. 12 is a flowchart showing operation of the best mode of the layer 2 (L2) network transfer system.

Referring to Fig. 1, a layer 2 network transfer system is constructed with nodes 10, 20, 30 and 40 and L2 switches (hereinafter referred to as SW) 11 to 17. Then, in this layer 2 network, as one example, three virtual networks (VLANs: Virtual Local Area Networks) are set.

The first virtual network VLAN 1 is constructed with a link from the node 20 to the node 40 via SW 16 and SW 17, a link from SW 16 to the node 30 via SW 11, and a link from SW 17 to the node 30 via SW 12 (in Fig. 1, these links are illustrated by solid lines). The second virtual network VLAN2 is constructed with a link from the node 20 to the node 10 via SW 16 and SW 11, a link from the node 40 to the node 30 via SW 17 and SW 12, and a link from the node 10 to the node 30 via SW 11 and SW 12 (in Fig. 1, these links are illustrated by thick broken line). The third virtual network VLAN3 is constructed with a ling from the node 20 to the node 10 via SW 13, a link from the node 40 to the node 30 via SW 15 and a link connecting SW 13, SW 14 and SW 15 (in Fig. 1, these links are illustrated by thin broken line).

As set forth above, the first to third virtual networks VLAN1 to VLAN3 are set respectively so as not to form a loop. It should be noted that these virtual networks VLAN1 to VLAN3 are realized by VLAN-Tag technology defined in IEEE 802.3.

Next, operation of the shown embodiment will be discussed. In a header of a forward packet, a virtual network number indicating belonging virtual network is added as a tag (Tag) information (S1). Each SW 11 to 17 performs switch control only between ports defined by the virtual network number (S2). For example, in SW 16, a packet added the tag of VLAN1 is switched between the ports of the node 20, SW 17 and SW 11, and switching to SW 14 is inhibited. It should be appreciated that switching per se is performed on the basis of MAC (Media Access Control) address. On the other hand, switch control and setting of the virtual network using the VLAN tag are realized by existing SW.

Since this VLAN1 does not form a loop, it is possible to avoid circulating of the packet on the loop, and STP does not operate. Furthermore, it is also effective to construct each of VLAN1 to VLAN3 reflecting policy of administrators. On the other hand, VLAN2 and VLAN3 not forming the loop achieves similar effect to VLAN1.

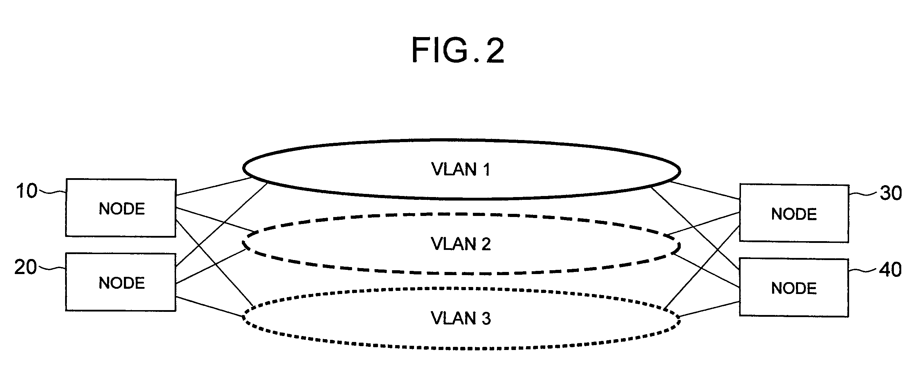

Fig. 2 is an illustration showing a relationship between each virtual network VLAN1 to VLAN3 constructed by the L2 switches (SW) and the nodes 10, 20, 30 and 40. Logically, respective nodes are connected by three mutually distinct LANs. Accordingly, each node can perform parallel transmission through three LANs. As can be clear from comparison of number of links in operation of Fig. 27 and Fig. 2, with the network according to the present invention, use efficiency can be improved.

It should be noted that, in Fig. 1, SW 11 and SW 16 are connected by VLAN1 and VLAN2 as shown by thick line and broken line, for example. This includes both cases of connecting with different Ethernet (registered trademark) among p (p is positive integer) in number of Ethernet and of connecting with physically the same Ethernet (registered trademark).

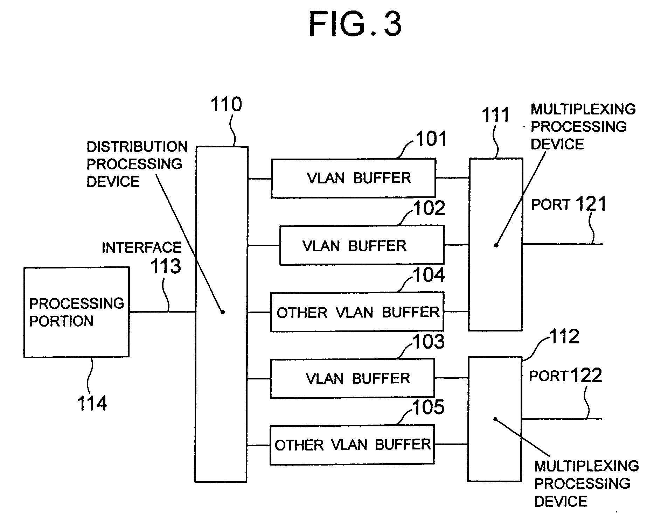

Next, discussion will be given for transfer control to the virtual network in each node. Fig. 3 is an illustration showing a construction of one embodiment of a transmission path interface having Ethernet (registered trademark) ports 121 and 122. Referring to Fig. 3, the node is constructed with incorporating a distribution processing device 110, VLAN buffers 101 to 103, other VLAN buffers 104 and 105, a multiplexing processing devices 111 and 112. Then, in the node, it is connected to a processing portion 114 in the node by an interface 113.

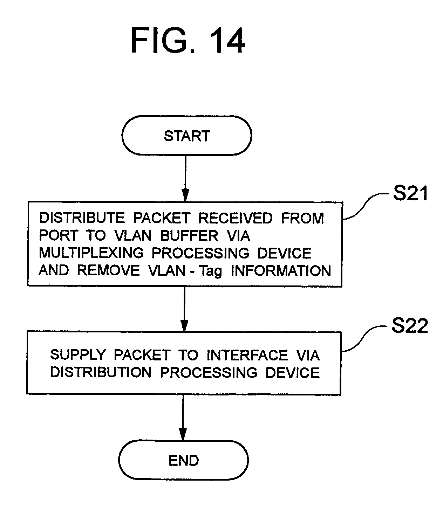

Next, operation of the nodes will be discussed. Fig. 13 is a flowchart showing an operation of a node upon transmission, and Fig. 14 is a flowchart showing an operation of a node upon reception. The packet supplied from the interface 113 is distributed to the VLAN buffers determined by the distribution processing device 110 and VLAN-Tag information thus determined is added to the packet as the header information (S11). Furthermore. the packet is output by the ports 121 and 122 respectively connected to the L2 switches via the multiplexing processing devices 111 and 112.

On the other hand, upon reception, the packets received by the ports 121 and 122 are distributed to the multiplexing processing devices 111 and 112 and the VLAN buffers respectively, and the VLAN-Tag information added to the packets are removed (S21). Furthermore, the packet is supplied to the interface 113 via the distribution processing device 110 (S22).

### [Embodiment]

At first, discussion will be given for the first embodiment relating to transfer between L2 processing nodes. Referring to Fig. 3, the L2 packet supplied via the interface 113 is read out the header information in the distribution processing device 110 and is supplied to the VLAN buffers 101, 102 and 103 corresponding to VLAN 1, 2 and 3. In Fig. 3, there are also illustrated the VLAN buffers 104 and 105 corresponding to other VLAN. However, in the shown embodiment, discussion is limited to transfer control between the nodes 10, 20, 30 and 40 connected by VLAN 1, 2 and 3 and the buffers corresponding to other VLAN will not be concerned.

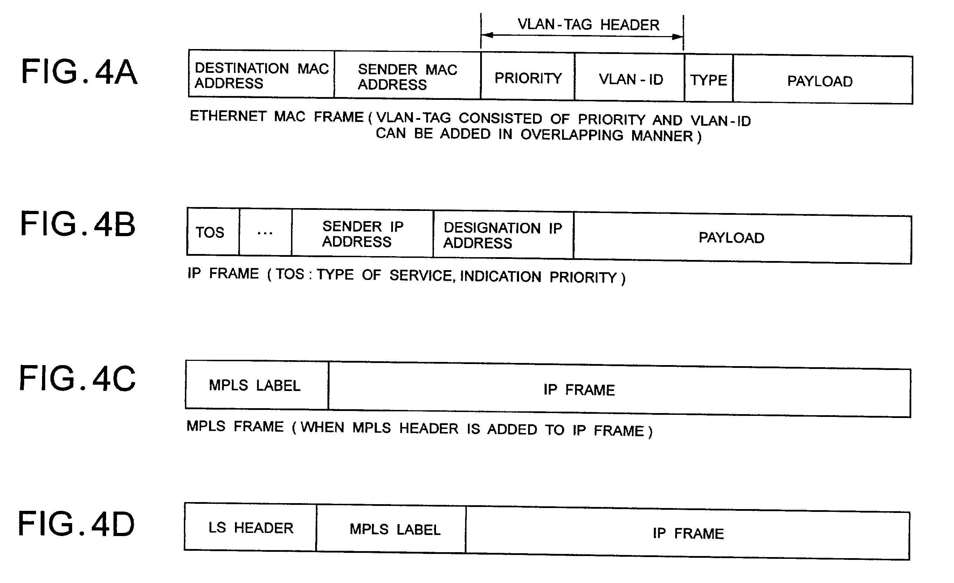

Fig. 4A shows an L2 frame corresponding to Ethernet (registered trademark). Referring to Fig. 4A, the L2 frame is consisted of a designation MAC address, a sender MAC address, a VLAN-Tag header, a Type and a Payload. Furthermore, the VLAN-Tag head contains a priority information and VLAN-ID and can be attached and detached in the network.

Next, some examples of distribution algorithm in the distribution processing device 110 will be discussed. First one is a method to cyclically distributing the arriving packets to the VLAN buffers 101, 102 and 103 in sequential order. In this case, load to respective VLAN is uniformly distributed. However, since the same destination MAC address may be distributed to the different virtual network, it is possible that arriving order on the recipient side is reversed. As a method for avoiding this, there is a method to supply the packets having the same destination MAC address to the same VLAN buffer by accumulating the destination MAC address. In this case, while the packets having the same destination MAC address can be supplied to the same VLAN buffer, distribution becomes random. Namely, load of three buffers becomes close to uniform. It should be noted that the distribution control algorithm per se in the distribution processing device 110 does not limit the present invention. Also, when VLAN-Tag is attached to the packet signal from the interface 113, it can be distributed corresponding to the number.

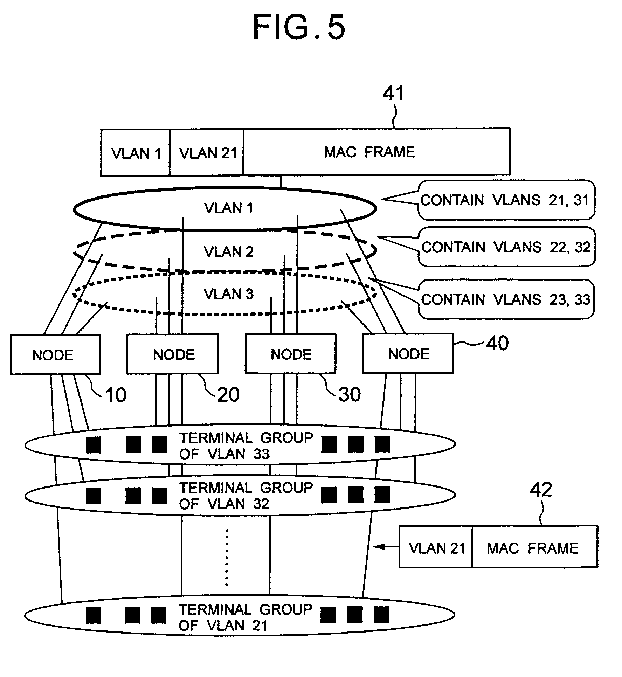

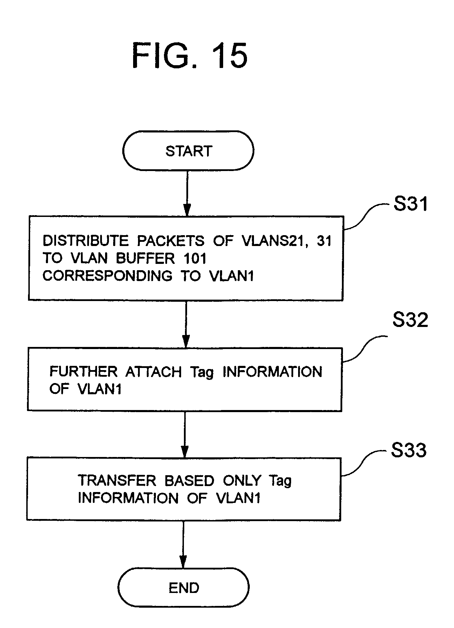

Next, the second embodiment will be discussed. Fig. 5 is an illustration showing a construction of the second embodiment of the virtual network, and Fig. 15 is a flowchart showing operation of the second embodiment. Discussion will be given for the case that terminal groups belonging VLAN 21, 22, 23, 31, 32, 33 (VLAN 22, 23, 31 are eliminated from illustration) are connected to the nodes 10, 20, 30 and 40 as shown in Fig. 5. The distribution processing device 110 distributes the packets of VLAN 21 and 31 to VLAN buffer 101 corresponding to VLAN 1 (S 31) . In the VLAN buffer 101, VLAN-Tag information is further attached (S32). Similarly, the packets of VLAN 22 and 32 and the packets of VLAN 23 and 33are respectively distributed to VLAN buffers 102 and 103 corresponding to VLAN 2 and 3, and Tag information of VLAN 2 and VLAN 3 are attached.

For example, from the terminal belonging in the virtual network VLAN 21 defined between the terminals, a packet frame having leading header of VLAN 21 is supplied to respective nodes as shown by the packet frame 42 of Fig. 5. In the virtual network VLAN 1, a header of VLAN 1 is added as leading header, as shown by the packet frame 41. In the shown embodiment, the packet attached two VLAN-Tags is transferred. However, transfer process is performed only based on the leading VLAN-Tag information (VLAN 1, VLAN 2, VLAN 3) attached by the VLAN buffer (S33).

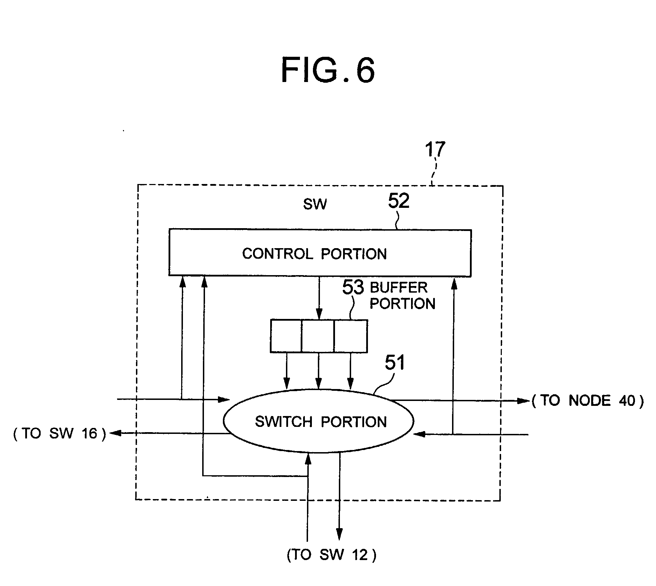

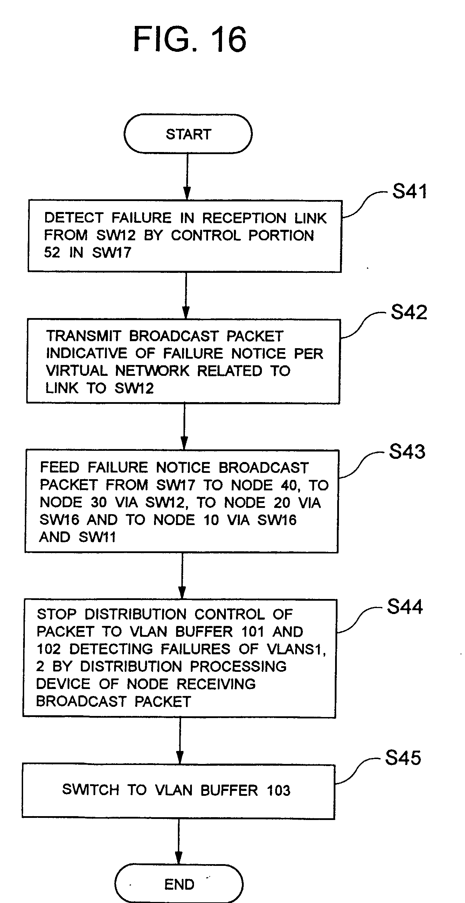

Next, the third embodiment will be discussed. Fig. 6 is an illustration showing a construction of one example of the L2 switch and Fig. 16 is a flowchart showing operation of the third embodiment. The discussion heretofore has been given for the case where three virtual networks are connected between respective nodes. However, in the third embodiment, the construction of the L2 switch such as SW12, SW17 and so forth is shown in Fig. 6, and control upon occurrence of failure will be exemplarily discussed for the case where SW17 detects failure in reception link from SW12. In Fig. 6, Sw17 is constructed with a control portion 52, a node 40, a switch portion 51 containing reception link and transmission link connected to SW12 and SW16, and a buffer portion 53 having a buffer area corresponding to the virtual network.

Upon detection of failure in the reception link from SW12 (S41), the control portion 52 transmits a broadcast packet indicative of failure notice per virtual network from a buffer area in the buffer portion 53 corresponding to the virtual network relating to the link to the SW12, in this case to VLAN1 and VLAN2 (S42). The failure notice broadcast packet attached to VLAN-Tag indicative of VLAN1 and VLAN2 is supplied to the transmission link to SW12, SW16 and the node 40 to directly arrive the node 40, the node 30 via SW12, and the nodes 20 and 10 via SW16 and SW11 (SW43). Since VLAN1 and VLAN2 do not form any loop, the failure notice broadcast packet will never infinitely circulate. In Fig. 3, the failure detection broadcast packet is received by the VLAN buffers 101 and 102 via the ports 121. Upon detection of failure of VLAN1 and VLAN2 by reception of the failure detection broadcast packet, the distribution processing device 110 interrupts distribution control to the VLAN buffers 101 and 102 (S44) and switches to the VLAN buffer 103 (S45).

Discussing in the construction shown in Fig. 2, packets are transferred in parallel by distributing to VLAN 1, 2 and 3. Then, in response to occurrence of failure, the distribution control is switched to transfer the packets only through VLAN 3. In case of the STP control, it takes a long period for exchanging the failure signal between the L2 switches and varying structure into the optical tree. In contrast to this, in the present invention, upon switching the route, a period corresponding to "reconstruction of the tree" becomes unnecessary to permit high speed switching.

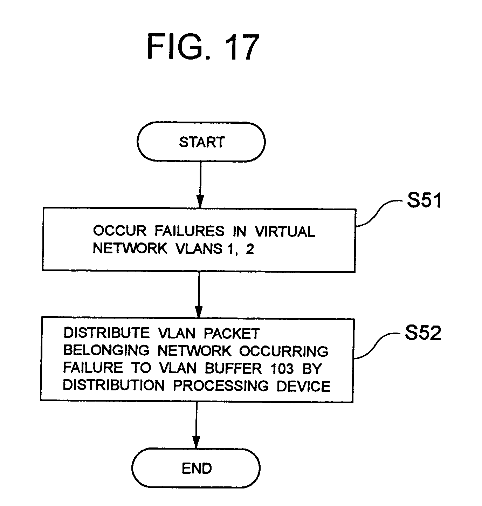

Next, discussion will be given for the fourth embodiment. Fig. 17 is a flowchart showing operation of the fourth embodiment. In the first embodiment set forth above, all of VLAN 1, 2 and 3 are working, whereas in the fourth embodiment, VLAN 1 and 2 are working, and VLAN 3 constituted of intermediate routes disjoint to the routes in VLAN 1 and 2 is taken as reserve system. In the shown embodiment, when failure is caused one or both of VLAN 1 and 2 (e.g. between SW11 and SW12 or between SW16 and SW17), the network is operated to switch the virtual network causing failure to VLAN 3.

The distribution processing device 110 of Fig. 3 performs distribution control for packets to be transmitted for distributing to the VLAN buffers 101 and 102, in normal case. However, when failure is detected in the virtual network (S51), the packets belonging in the faulty virtual network is controlled to be distributed to the VLAN buffer 103 (S52). By this, switching from working system to reserved system can be realized. At this time, by preliminarily designing the working virtual network and the reserved virtual network so as not to overlap, switching to the reserved system can be done without investigating faulty portion in the current virtual network to quicken recovery from failure.

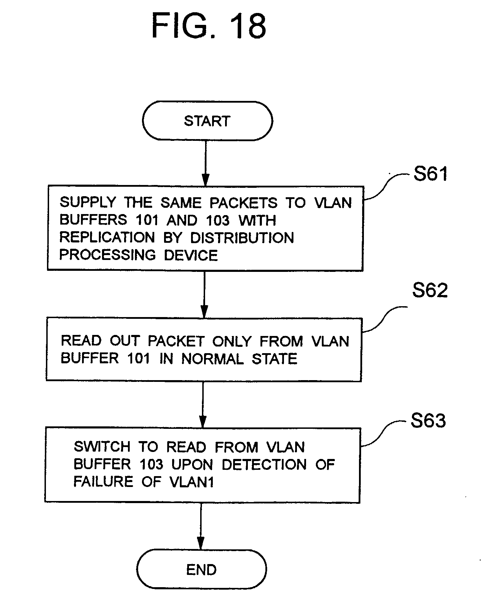

Next, discussion will be given for the fifth embodiment. Fig. 18 is a flowchart showing operation of the fifth embodiment. As the fifth embodiment, a protection method in order to further speed up recovery from failure will be discussed. In this case, among two VLAN having mutually disjoint intermediate routes, one (VLAN1) is taken as working and the other (VLAN3) is taken for protection. In the sender side node, the distribution processing device 110 supplies to VALN buffers 101 and 103 by replicating the same packet signal(S61). Accordingly, in Fig. 2, the same packet is supplied to VLAN1 and VLAN3. On reception side node, the same packet is stored in the VLAN buffers 101 and103. Normally, the distribution processing device 110 reads out the packet from the VLAN buffer 101 (S62). Upon detection of failure of VLAN1, switching is effected to read out from the VLAN buffer 103 (S63). In the shown embodiment, since recovery from failure can be done by controlling reading out from the buffer on reception side, more high speed recovery control can be realized.

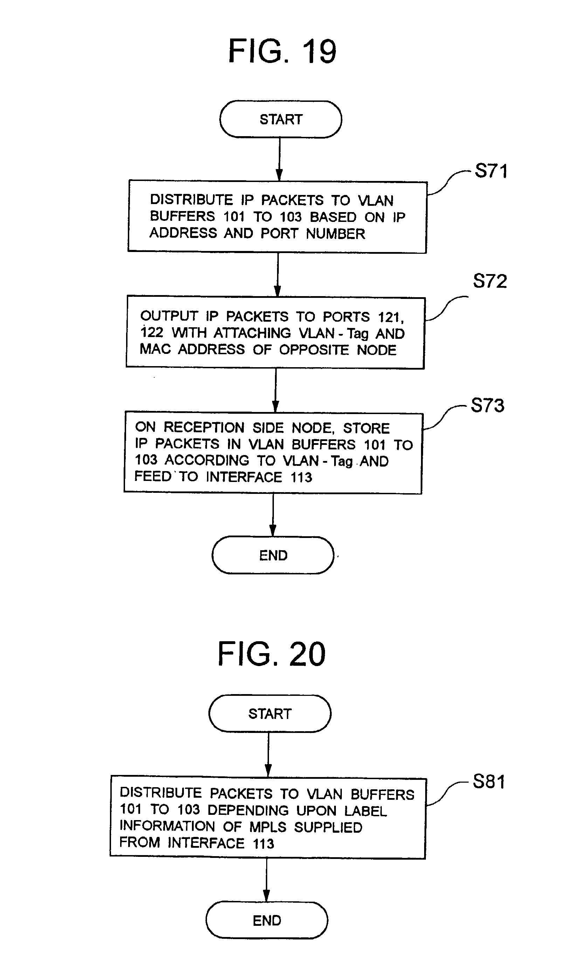

Next, the sixth embodiment will be discussed. Fig. 19 is a flowchart showing operation of the sixth embodiment, and Fig. 4B is an illustration showing a structure of an IP frame. The sixth embodiment relates to transfer between IP layer processing nodes. Each node used in the shown embodiment has a function corresponding to an IP router. Referring to Fig. 4B, the IP frame using the shown embodiment is consisted of TOS (Type of Service: indicative of preference), a transmission IP address, a destination IP address and Payload.

In Fig. 2, the IP packet (see Fig. 4B for frame structure) supplied via the interface 113 is distributed to the VLAN buffers 101, 102 and 103 on the basis of the destination IP address or the port number in the distribution processing device 110 (S71). To the IP packet stored in the VLAN buffers 101, 102 and 103, VLAN-Tag indicative of the virtual network number and MAC address of each opposite node (adjacent router: Next Hop Router) are attached to be output to respective ports 121 and 122 via the multiplexing processing devices 111 and 112 (S72). In the node 10, the port 121 corresponds to the port to SW11 and the port 122 corresponds to the port to SW13. In the node on reception side, the IP packet received via the multiplexing processing devices 111 and 112 are stored in the VLAN buffers 101, 102 and 103 according to VLAN-Tag information and received by the interface 113 via the distribution processing device 110 (S73).

The MAC address of the opposite node can be obtained by the following known method. Namely, the IP address is assigned for the interface of the opposite node (next hop router). The MAC Address can be resolved by a known Address Resolution Protocol per the virtual network.

It should be noted that since the virtual network belonging the port 122 is only VLAN 103, the MAC address is one, where as for the port 121, difference MAC addresses may be assigned corresponding to VLAN 101 and 102, or in the alternative, single MAC address may be assigned commonly VLAN 101 and 102. By such control, each node prepares a correspondence table of the IP address of the opposite node and the MAC address. When each node contains IP terminal in a form illustrated in Fig. 5, the destination IP address in the header of the IP packet has to establish correspondence to the IP address of the IP terminal and the IP address of the opposite node. This can be realized by a known routing protocol represented RIP (Routing Information Protocol) or OSPF (Open Shortest Path First). Accordingly, the present invention is applicable even in the construction where the IP router is connected to a plurality of virtual networks as shown in Fig. 2.

Next, discussion will be given for the seventh embodiment. Fig. 20 is a flowchart showing operation of the seventh embodiment, and Fig. 4C is an illustration showing a construction of the MPLS frame. The seventh embodiment relates to transfer between MPLS nodes. Referring to Fig. 4C, MPLS frame is consisted of an MPLS label and an IP frame. In case of the MPLS network, in comparison with the case of IP router connection, by effectively using the feature, demand for enabling setting route to pass each MPLS path is high. To the MPLS frame, MPLS label information specifying the MPLS path is attached to the IP frame shown in Fig. 4B as the header information. This header can be attached and detached in the network. It should be noted that when the MPLS frame is transferred in the L2 network, a construction becomes as shown in Fig. 4D. Namely, to the leading end of the MPLS frame, the L2 header is attached.

In the present invention, different from the STP based L2 network on the basis of autonomous distributed control, since the configuration of the virtual network can be set according to intention (policy) of the administrator, the virtual network adapting to the route between the LAN switches to pass can be established according to demand for each MPLS path. Even in this point, it should be appreciated that the present invention is suitable as connection method between MPLS nodes. In the node structure shown in Fig. 3 (assuming that the node in Fig. 3 is MPLS node), the distribution processing device 110 distributes the packet to VLAN buffers 101, 102 and 103 depending upon label information of MPLS supplied from the interface 113 (S81). Accordingly, by correspondence table between the MPLS label and VLAN-Tag information in the distribution processing device 110, the MPLS path and the transfer virtual network are associated. Transfer between the MPLS nodes is realized in the same manner as the foregoing embodiment as based on the L2 switch. Accordingly, foregoing parallel transfer using a plurality of virtual networks, control upon occurrence of failure, control to make two virtual network working and one virtual network reserved, one-plus-one protection control must be realized by the same method as the former embodiment.

It should be noted that, in the foregoing discussion, L2 transfer, IP layer transfer, MPLS transfer are handed separately. However, it is possible to perform these control in the same node, and the same virtual network in the L2 network may be common for different services of the kinds set forth above.

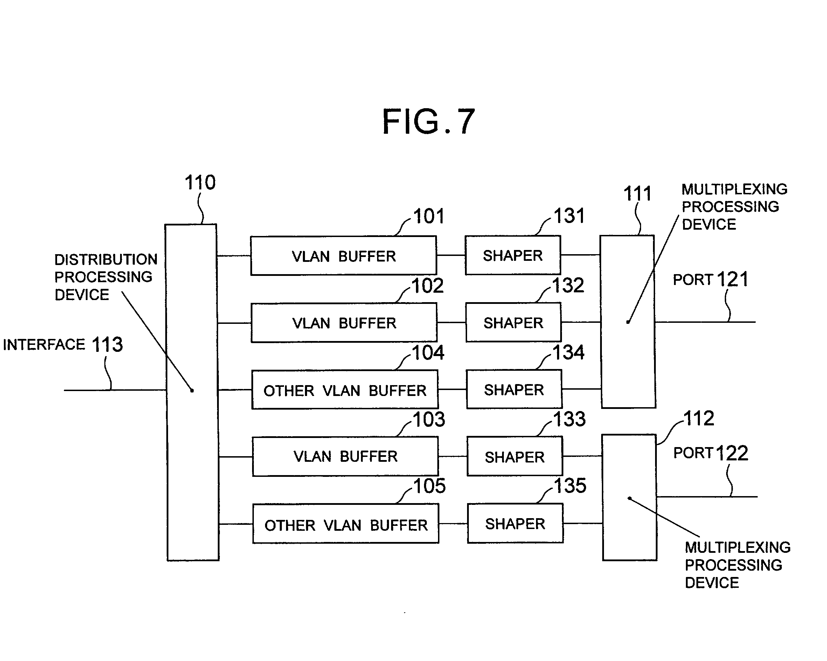

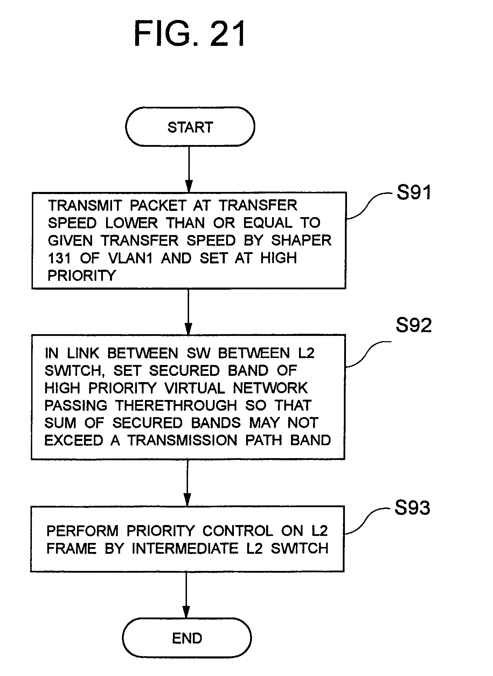

Next, discussion will be given for the eighth embodiment. Fig. 7 is an illustration showing one example of the node in the eighth embodiment, and Fig. 21 is a flowchart showing operation of the eighth embodiment. The eighth embodiment is directed to a band-ensuring control. In Fig. 7, like components to those in Fig. 3 will be identified by like reference numerals and disclosure for such common components will be eliminated for avoiding redundant description to keep the disclosure simple enough to clear understanding of the present invention. Referring to Fig. 7, corresponding to respective VLAN buffers 101 to 105, shapers 131 to 135 are provided. Corresponding to respective VLAN 1, 2 and 3, shapers 131, 132 and 133 are provided. The shaper is realized by a known packet shaping technology by a devices for restricting transfer speed to be lower than or equal to a set speed.

For example, assuming that VLAN1 is assigned for band ensuring service, then the shaper 131 performs feeding of packet at the transfer speed lower than or equal to a given transfer speed. At the same time, the priority field of the L2 frame is set at high priority (S91). Furthermore, in each link between the SW between L2 switches, a sum of the ensured band of the virtual network having high priority passing therethrough is designed with providing a given margin so as not to exceed the transmission line band (S92).

For example, when the ensured bands of the high priority virtual network VLAN1 and VLAN2 are assumed as 100 Mbps and 200 Mbps, respectively, for example, between SW16 and SW17, between SW11 and SW12 and between SW11 and SW16 in Fig. 1, transmission bands of 100 Mbps or higher, 200 Mbps or higher and 300 Mbps or higher have to be certainly obtained, respectively. On the other hand, in the intermediate L2 switches SW 11 to 17, preferential control on the L2 frame can be performed (S93) to certainly obtain the band between the nodes.

Namely, in the L2 network, band control, such as shaping is not required at all to ensure the band between the end nodes using the L2 switch available in the market. On the other hand, By setting the band of the transmission line through which the VLAN 3 serving as reserve network when failure is caused in VLAN 1 and 2, for example the transmission line between SW 13 and SW 14 higher than or equal to 300 Mbps, the band is ensured even if the network is changed to the reserve network when failure is caused in VLAN 1 and 2.

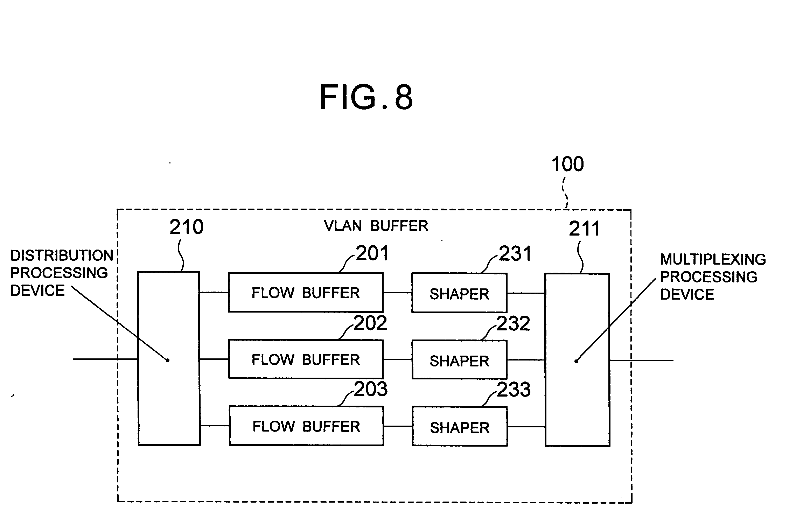

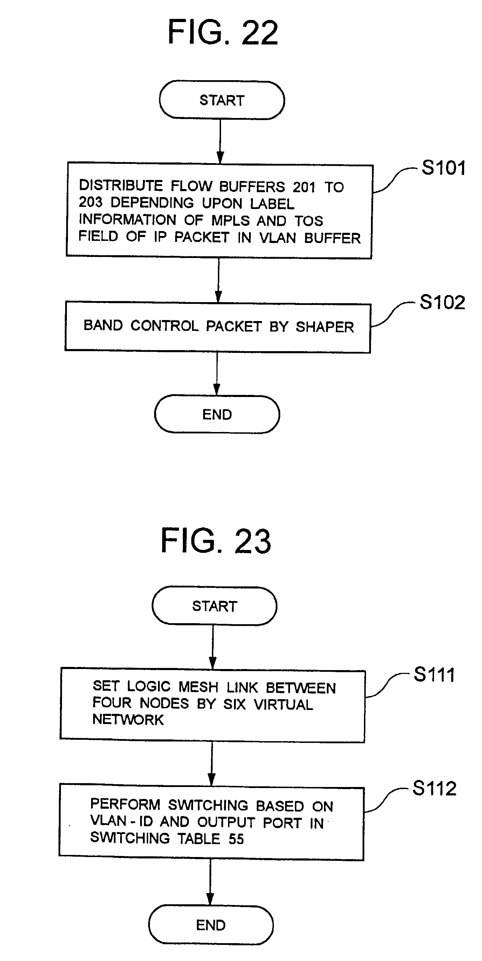

Next, discussion will be given for the ninth embodiment. Fig. 8 is an illustration showing a construction of one example of the VLAN buffer in the ninth embodiment, and Fig. 22 is a flowchart showing operation of the ninth embodiment. The ninth embodiment is directed band control to be performed per label of MPLS or per flow to the opposite node, for example, instead of band control per virtual network. Fig. 8 is an illustration showing a construction of VLAN buffers 101 to 105 of Fig. 3. Referring to Fig. 8, the VLAN buffer 100 is constructed with a distribution processing device 210, flow buffers 201 to 203, shapers 231 to 233 and a multiplexing processing circuit 211. In the distribution processing device 210, the packet is distributed to the flow buffers 201 to 203 depending upon flow of the packet supplied to the VLAN buffer 100 from the distribution processing device 110 of Fig. 3 (S101), for example, depending upon the level information of MPLS or the TPO field which represents the priority level of the IP packet. Each packet is subject to band control by respective shapers 231, 232 and 233 and output from the VLAN buffer 100 via the multiplexing processing device 211 (S102). By this control, more detailed band control than that per VLAN can be done.

Also, the functions of the distribution processing device 210 and the multiplexing processing device 211 placed in the VLAN buffer 100 may be realized with incorporating the functions of the distribution processing device 110 and the multiplexing processing devices 111 and 112. On the other hand, when the nodes 10, 20, 30 and 40 serves as router as shown in the sixth embodiment, it becomes possible to manage the packet toward the opposite node (next hop router). In the construction of Fig. 8, in place of buffering per flow, it is possible to perform buffering with classifying per opposite node. As set forth, using the present invention, band ensuring in various unit, such as per virtual network, per flow, per next hot router and so forth, becomes possible.

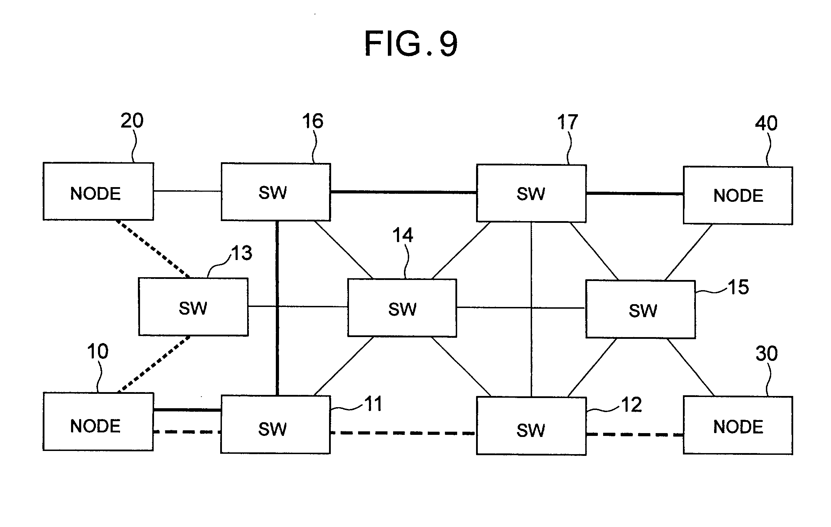

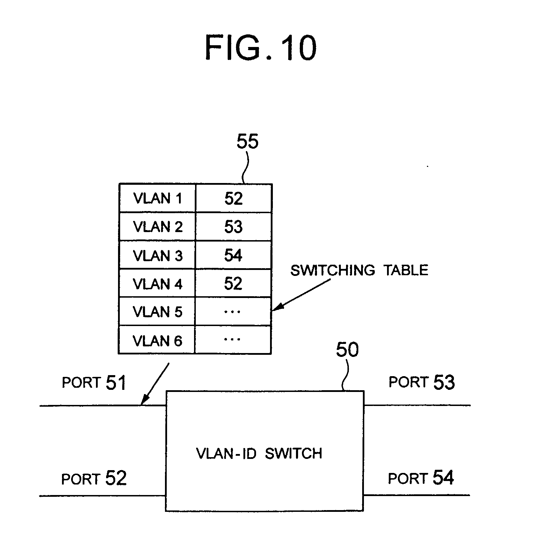

Next, discussion will be given for the tenth embodiment. Fig. 9 is an illustration showing a virtual network of the tenth embodiment, Fig. 10 is an illustration showing a construction of the L2 switch in the tenth embodiment, and Fig. 23 is a flowchart showing operation of the tenth embodiment. Referring to Fig. 9, from the node 10, three virtual networks are set to respective nodes 20, 30 and 40. While not illustrated in the drawings, two virtual networks are set from the node 20 to the nodes 30 and 40, and one virtual network is set between the nodes 30 and 40. Thus, with total six virtual networks, logically mesh-like link is set between four nodes (S111).

Referring to Fig. 10, in the foregoing embodiments, L2 switch performs switching using a MAC address. In contrast to this, the L2 switch in the shown embodiment is constructed with VLAN-ID switch 50 which is provided with four ports 51, 52, 53 and 54 and performs switching on the basis of VLAN-ID information shown in Fig. 4A.

Then, in a switching table 55 of each port, correspondence between the VLAN-ID and the output port is recorded. Then, switching is performed on the basis of this information (S112). In Fig. 10, there is shown one example of the switching table in the port 51. The switching table indicates that the packet is output from the port 52 when the VLAN-Tag of the packet input to the port 51 is VLAN 1. Thus, the packet can be transferred to the destination by only designating VLAN.

In the conventional L2 switch, the MAC address of the packet to be transferred is recorded in the switching table. In general, the number of MAC addresses is required large scale in the extent of several thousands to several ten thousands. Accordingly, by employing the switching table adapted to the VLAN-ID, the scale thereof can be restricted to contribute for down-sizing and lowering of cost of the device. On the other hand, since it becomes unnecessary to replace the label in link-by-link as required in the MPLS label, it not only contributes for down-sizing and lowering of cost of the device but also for simplification of management of the entire network.

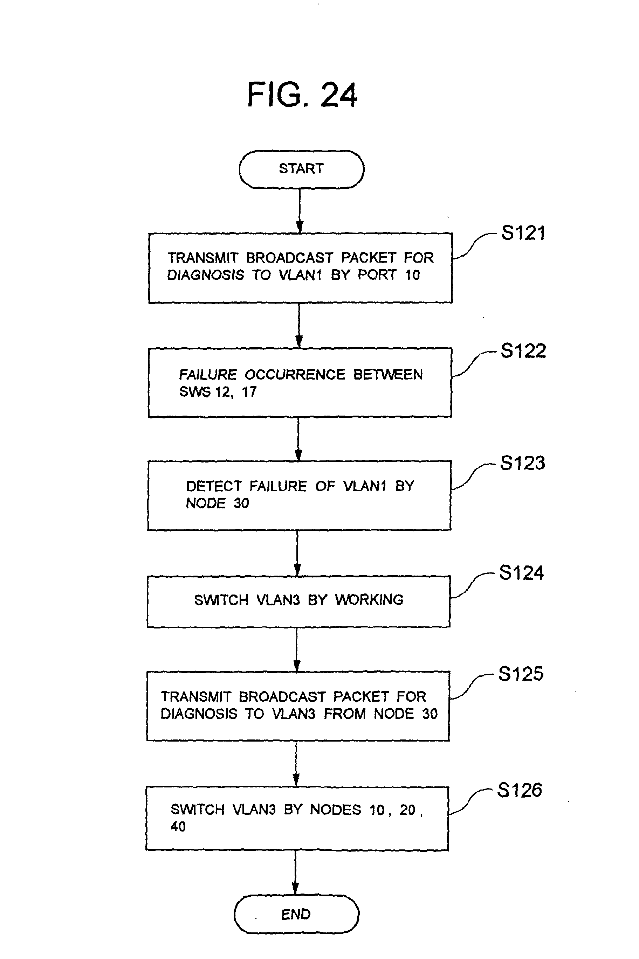

Next, discussion will be given for the eleventh embodiment. Fig. 24 is a flowchart showing operation of the eleventh embodiment. Discussion will be given with reference to Figs. 1 and 24. VLAN 1 is used as working and VLAN 3 is used as back-up. The VLAN 2 is not used in this embodiment. The node 10 transmits the broadcast packet for diagnosis for the VLAN 1 at a regular interval (S121). This packet is received in the nodes 20, 30 and 40. For example, when failure is caused between SW12 and SW17 (S122), the diagnosis packet from the node 10 is not received in the node 30. The node 30 detects failure of VLAN 1 by this fact (S123) and switch VLAN 3 to be working (S124). By this, the packet containing broadcast packet for diagnosis is transmitted to VLAN 3 from the node 30 (S125). Similarly, Since the diagnosis packet from the node 30 is not received in the nodes 10, 20 and 40, switching to VLAN 3 is performed (S126).

As set forth above, the diagnosis packet from the node separated from the network due to failure or the diagnosis packet from the node switched to VLAN 3 is not received from VLAN 1. Thus, all nodes are switched to VLAN 3.

Next, discussion will be given for operation of the node with reference to Fig. 3. In Fig. 3, it is assumed that the VLAN buffers 101 and 103 are buffers corresponding to VLAN 1 and VLAN 3. On the transmission side, until failure is detected, the broadcast packet for diagnosis is transmitted from the VLAN buffer 101. In the VLAN buffer 101, failure is detected by interruption of the broadcast packet for diagnosis from other nodes in the VLAN buffer 101. After detection of failure, communication is performed using the VLAN buffer 103. The packet for diagnosis is not necessarily the broadcast packet and can perform failure detection in unicast form communication with respective counterpart node. In this case, between the nodes not disconnected by the failure, VLAN 1 is used in current configuration, and between the disconnected nodes, communication is switched to VLAN 3.

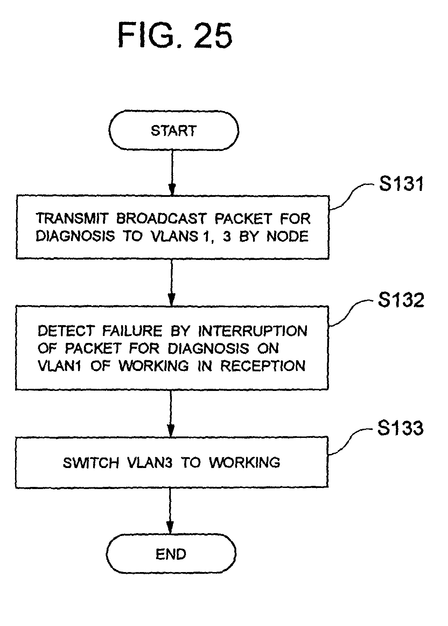

Next, discussion will be given for the twelfth embodiment. Fig. 25 is a flowchart showing operation of the twelfth embodiment. It should be noted that, even in the shown embodiment, VLAN 2 is not used. In the shown embodiment, each node transmits the packet to be transmitted to VLAN 1 and VLAN 3 including the packet for diagnosis with replicating the packet (S131). Accordingly, the same packets appear in VLAN 1 and VLAN 3. On the reception side, failure is detected by interruption of the packet for diagnosis on the working VLAN 1 (S132) and VLAN 3 is switched as working (S133). In Fig. 3, to the VLAN buffers 101 and 103, the same packets including the packet for diagnosis are supplied by replication. By the VLAN packet 101 corresponding to the working VLAN 1, reception of the packet for diagnosis from other node is interrupted. The buffer selected as reception side by the distribution processing device 110 is switched to the VLAN buffer 103. Thus, by the present invention, protection function per the virtual network on the layer 2 is realized.

It should be noted that, in the eleventh and twelfth embodiments, discussion has been given for the method for detecting failure by interruption of reception of the packet for diagnosis. However, failure detection may also be done by detecting interruption of the reception packet per se. In this case, upon transmission, each node transmits the packet for diagnosis when the absence of the packet signals transmission continues for a given period.

As set forth above, with the present invention, since the intermediate L2 switch does not contribute for switching control, switching can be performed at high speed irrespective of number of steps of relaying L2 switches and number of virtual networks to pass respective L2 switch.

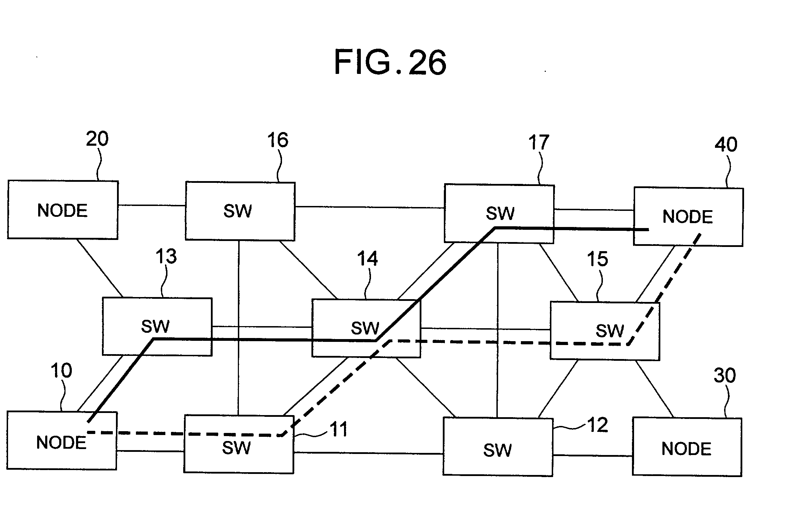

Next, discussion will be given for the thirteenth embodiment. Fig. 26 is an illustration showing a construction of the virtual network in the thirteenth embodiment. In the present invention, the passage that the virtual network does not form loop or the virtual networks do not overlap, merely requires separation in route and thus includes the case where L2 switches may be used in common. Referring to Fig. 26, two virtual networks shown by solid line and broken line are illustrated between the nodes 10 and 40. These two virtual networks use SW14 in common. However, between two virtual networks, exchanging of data is not performed. Such configuration may be included in the present invention.

Discussion is given heretofore in connection with VLAN-ID as an identifier of the virtual network on the L2 network of the present invention. However, the present invention is not limited to this but can includes the case where scale of the network is large, a plurality of VLAN-Tag headers shown in Fig. 4A are arranged or other type label information, such as MPLS label (e.g. 20 bits) having longer information amount than VLAN-ID (e.g. 12 bits) may be used as identifier. The present invention is featured not requiring change of label information and protocol for label distribution when MPLS label information is used. Also, the position is also within the L2 header and is different from known MPLS network.

With the network transfer system according to the present invention, a plurality of nodes performing mutual communication is connected by a plurality of virtual network having routes which do not form loops. Therefore, policy of administrator can be reflected in route setting to permit effective use of the network resource and also permit quick restoration of failure.

On the other hand, the network transfer method according to the present invention achieves similar effect to the network transfer system.

More particularly, the following effect can be achieved using inexpensive layer 2 switch:
(1) to enable route setting and alternate routing control in policy basis;
(2) prevention of infinite looping of the packet;
(3) enabling route designing in working and reserve basis;
(4) enable one-by-one protection control;
(5) switching of route including fault recovery only by switching control in the node at the edge of layer 2 transfer network;
(6) realizing high speed switching control;
(7) realizing band ensuring between nodes at the edge;
(8) providing low cost switch by using switch based on the virtual network number as layer 2 switch; and
(9) contributing lowering of cost of the network; By mutually connecting L2 switch network between MPLS routers, service equivalent to traffic engineering in policy base realizing MPLS is offered. Then, it becomes possible to construct the core portion of the network by L2 switch.

Although the present invention has been illustrated and described with respect to exemplary embodiment thereof, it should be understood by those skilled in the art that the foregoing and various other changes, omission and additions may be made therein and thereto, without departing from the spirit and scope of the present invention. Therefore, the present invention should not be understood as limited to the specific embodiment set out above but to include all possible embodiments which can be embodied within a scope encompassed and equivalent thereof with respect to the feature set out in the appended claims.

## Claims

1. A network transfer system connecting a plurality of nodes performing mutual communication with a plurality of virtual networks having routes forming no loop.

2. A network transfer method connecting a plurality of nodes performing mutual communication with a plurality of virtual networks having routes forming no loop for packet transmission between a plurality of nodes via said virtual networks.

3. A system or method as set forth in claim 1 or 2, wherein said virtual network are formed using a plurality of switches.

4. A system or method as set forth in claim 1, 2 or 3, wherein routes of said virtual network have overlap at least in part.

5. A system or method as set forth in claim 1, 2, 3 or 4, wherein a parallel transfer communication is performed between nodes using said virtual network.

6. A system or method as set forth in any one of claims 1 to 5, wherein said node attaches a tag information specifying said virtual network to a packet in advance of transmission of said packet to said virtual network, and removing said tag information specifying said virtual network from the packet received from said virtual network.

7. A system or method as set forth in any one of claims 1 to 6, wherein said node has a plurality of buffers corresponding to respective virtual networks and storing packets to be transmitted and received in said buffer.

8. A system or method as set forth in any one of claims 1 to 7, wherein said virtual network is consisted of a first virtual network group and a second virtual network group, and a packet of said second virtual network group is transferred via said first virtual network group corresponding to this network.

9. A system or method as set forth in claim 8, wherein a tag information specifying said first virtual network corresponding to the network is attached together with a tag information specifying said second virtual network, to a packet of said second virtual network, and said packet is transferred on the basis of only tag information specifying said first virtual network.

10. A system or method as set forth in any one of claims 1 to 9, wherein said packet is transferred using a plurality of said virtual networks in normal state, and upon occurrence of failure in a part of said virtual network, the packet to be transferred to the faulty virtual network is transferred via other virtual network.

11. A system or method as set forth in any one of claims 1 to 10, wherein said node is responsive to detection of failure of said virtual network, to transmit a broadcast packet notifying failure for the virtual network relating to the faulty portion, and an opposite node receiving the broadcast packet switches to other virtual network.

12. A system or method as set forth in any one of claims 1 to 11, wherein said virtual network is consisted of two virtual networks having intermediate routes not overlapping, and one of said two virtual network is taken as working and the other is taken as reserve, and when failure is caused in working virtual network, said the other virtual network as reserve is switched to be working.

13. A system or method as set forth in any one of claims 1 to 12, wherein said virtual network is consisted of two virtual networks having intermediate routes not overlapping, the same packet is transmitted from said node to an opposite node via said two virtual networks, said opposite note normally reads out the packet received through one of said virtual networks, and upon occurrence of failure in one of virtual network, the packet received via the other virtual network is read out.

14. A system or method as set forth in any one of claims 1 to 13, wherein said node is a node for layer 2.

15. A system or method as set forth in any one of claims 1 to 14, wherein said node is an node for IP layer, a tag information specifying at least said virtual network is attached to a packet to be transmitted from each node, said packet is transmitted through the virtual network indicated in said tag information.

16. A system or method as set forth in any one of claims 1 to 15, wherein said node is a node for MPLS, a tag information specifying at least said virtual network is attached to a packet to be transmitted from each node, said packet is transmitted through the virtual network indicated in said tag information.

17. A system or method as set forth in any one of claims 1 to 16, wherein said node attaches a header information indicative of band control and high priority transfer per said virtual network upon transmission of the packet, and a switch of said virtual network performs switch control with taking priority control into account.

18. A system or method as set forth in any one of claims 1 to 17, wherein said node transmits a packet attaches a header information indicating band transfer control and a high priority transfer per virtual network upon transmission of packet and performs switch control with taking priority control into account.

19. A system or method as set forth in any one of claims 1 to 18, wherein said virtual network is set in a form connecting a pair of nodes, in a switch of said virtual network, a switching table indicating correspondence between a tag information specifying said virtual network and a port is provided, and said switch switches said virtual network to transfer the packet on the basis of said switching table.

20. A system or method as set forth in any one of claims 1 to 19, wherein said virtual network is consisted of two virtual networks having routes not overlapping, one being used as working and the other being used as reserve, a broadcast packet for diagnosis is transmitted from a sender node to a plurality of opposite nodes via working virtual networks, and said virtual networks are switched on said node side on the basis of a result whether the broadcast packet is received or not.

21. A system or method as set forth in any one of claims 1 to 20, wherein said virtual network is consisted of two virtual networks having routes not overlapping, the same packets including the packet for diagnosis is transmitted from said node to opposite note via said two virtual networks, in said opposite node, only packet received via one of virtual networks is read out in normal state, and upon occurrence of failure in the virtual network, the packet received via the other virtual network is read out.

22. A system or method as set forth in any one of claims 1 to 21, wherein the switch provided in said virtual network is used in common between different virtual networks.
